Europäisches Patentamt

European Patent Office · (11) Publication number: **0 282 270**

Office européen des brevets **A1**

(12) **EUROPEAN PATENT APPLICATION**

(21) Application number: **88302023.2**

(22) Date of filing: **09.03.88**

(51) Int. Cl.⁴: **G 05 B 19/403**
**G 05 B 19/04**

(30) Priority: **13.03.87 US 25895**

(43) Date of publication of application:
**14.09.88 Bulletin 88/37**

(84) Designated Contracting States:
**BE CH ES FR GB IT LI SE**

(71) Applicant: **WESTINGHOUSE ELECTRIC CORPORATION**
**Westinghouse Building Gateway Center**
**Pittsburgh Pennsylvania 15222 (US)**

(72) Inventor: **Colbaugh, Michael Edward**
**105 Kieylein Court**
**Level Green, PA 15085 (US)**

**Liscio, Edward Paul**
**611 Brown Avenue Apt. No. 206**
**Turtle Creek, PA 15145 (US)**

(74) Representative: **van Berlyn, Ronald Gilbert**
**23, Centre Heights**
**London, NW3 6JG (GB)**

(54) **Programmable motor controller using look-up memory.**

㊲ A programmable motor controller employs a look-up memory (68; 96; 144; 124) which receives from an address generating means (46-50; 62; 64; 90-94; 114; 118; 134; 136; 220; 222; 230; 234) address signals corresponding to various environmental states and which stores the address signals as encoded control signals corresponding to predetermined motor responses. A motor control circuit (76; 100; 158; 166; 226) then accesses the encoded control signals to drive at least one motor according to the stored control signals. The use of a look-up memory permits sophisticated motor control without the expense of a microprocessor and without the delay which may arise when a microprocessor is used.

FIG. 2.

EP 0 282 270 A1

**Description**

### PROGRAMMABLE MOTOR CONTROLLER USING LOOK-UP MEMORY

The present invention relates to a motor controller, and more particularly to a programmable motor controller which employs a look-up-table stored in memory.

A number of systems are known for controlling motors so as to provide a desired motor response. For example, the actual speed of a motor can be controlled by comparing a signal corresponding to the desired motor speed with a feedback signal representing the actual motor speed, and driving the motor in accordance with an error signal which results from this comparison. The advent of the microprocessor has permitted sophisticated computer techniques to be employed for controlling motors. Microprocessors are suitable for complex control tasks which may depend upon a number of input signals or conditions. The use of microprocessors for motor control, however, has several disadvantages. Microprocessors are relatively expensive, both in hardware and developmental expenses. Moreover, microprocessors may be unsuitable when quick motor response is needed, since execution of a single instruction typically requires several clock cycles. A complex control program may thus result in sluggish control.

The present invention avoids these prior art limitations by providing a motor controller which is suitable for complex control tasks but which responds more rapidly than a controller which employs a microprocessor. The reduced complexity and improved response of such a controller are achieved by applying digital feedback signals or other control inputs to the address input pins of a read-only or writable memory which stores the desired response for each possible address input. The programmed control signals for the motor controller. represent an encoded algorithm defining the desired motor response for a range of possible inputs to the memory and may be rapidly accessed through a timing circuit to control the motor.

The object of the present invention is to provide a programmable motor controller.

Accordingly, with this object in view, the present invention resides in an apparatus for controlling at least one motor as recited in claim 1.

The preferred embodiment of the invention is described, by way of example, with reference to the accompanying drawings in which:

Figure 1 is a side view illustrating mechanical components in a fiber-dispensing and take-up apparatus having a programmable controller in accordance with a first embodiment of the present invention;

Figure 2 schematically illustrates an electrical block diagram of the first embodiment of the programmable controller, along with the X-Y position sensor and its relationship to the fiber reel;

Figure 3 is a diagram illustrating the desired X-Y response of the motor in Fig. 2;

Figures 4A-4C illustrate a timing diagram for sequencing the programmable controller of Fig. 2;

Figures 5A and 5B are a diagram schematically illustrating the contents of the look-up memory of the programmable controller of Fig. 2;

Figure 6 schematically illustrates a hobbyist's lathe which is controlled, so that the workpiece maintains a substantially constant tangential velocity with respect to a cutting tool, by a second embodiment of the programmable controller of the present invention;

Figures 7A and 7B schematically illustrate an X-Y table which is controlled, so as to move a workpiece mounted on the X-Y table for drilling at points along a path, by a third embodiment of the programmable controller of the present invention;

Figures 8A and 8B are a diagram schematically illustrating the contents of a look-up memory in an example of the programmable controller of Fig. 7;

Figure 9 is a diagram schematically illustrating positions to be drilled in another example of the programmable controller of Fig. 7; and

Figure 10 schematically illustrates a fourth embodiment of the programmable controller, for motor speed control.

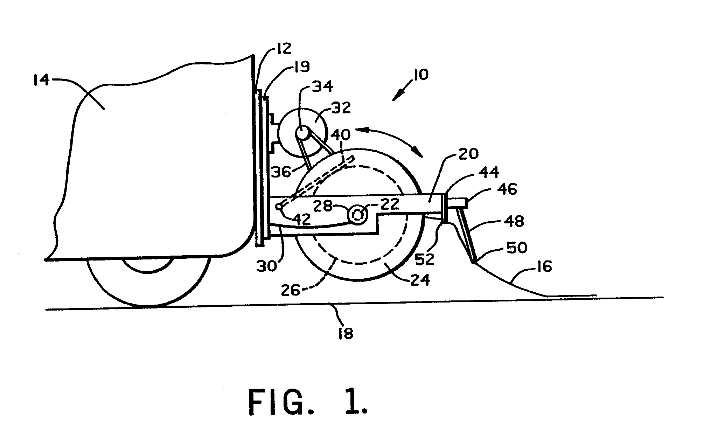

Figure 1 illustrates an automatic dispensing and take-up apparatus 10 which employs a programmable controller in accordance with a first embodiment of the invention. Apparatus 10 is secured to mounting rails 12 which are affixed to the rear of a vehicle 14. As will be discussed, apparatus 10 automatically dispenses or retracts a cable or filament such as optical fiber 16 as vehicle 14 moves on surface 18.

Apparatus 10 includes a mounting board 19 which is removably secured to rails 12. A pair of spaced apart arm members 20 (only one of which is illustrated in Fig. 1) are mounted on board 19. A hollow pipe 22 is mounted to arms 20 and serves as an axle which rotatably supports reel 24, on which is wound a supply 26 of fiber 16. The inner end (not illustrated) of fiber 16 extends through pipe 22 to a rotary optical coupler 28 affixed to one of the arm members 20. A fiber 30 connects coupler 28 to equipment (not illustrated) within vehicle 14 so that fiber 16 can be used for communication even as it is being dispensed. This permits communication with the driver of vehicle 14. Alternatively, vehicle 14 may be remotely controlled by signals which are conveyed through fiber 16. The communication may be two-way, with equipment such as television cameras (not illustrated) generating signals which are conveyed from vehicle 14 to a remote location by fiber 16. In situations where communication is not needed as vehicle 14 progresses, coupler 28 and fiber 30 may of course be omitted.

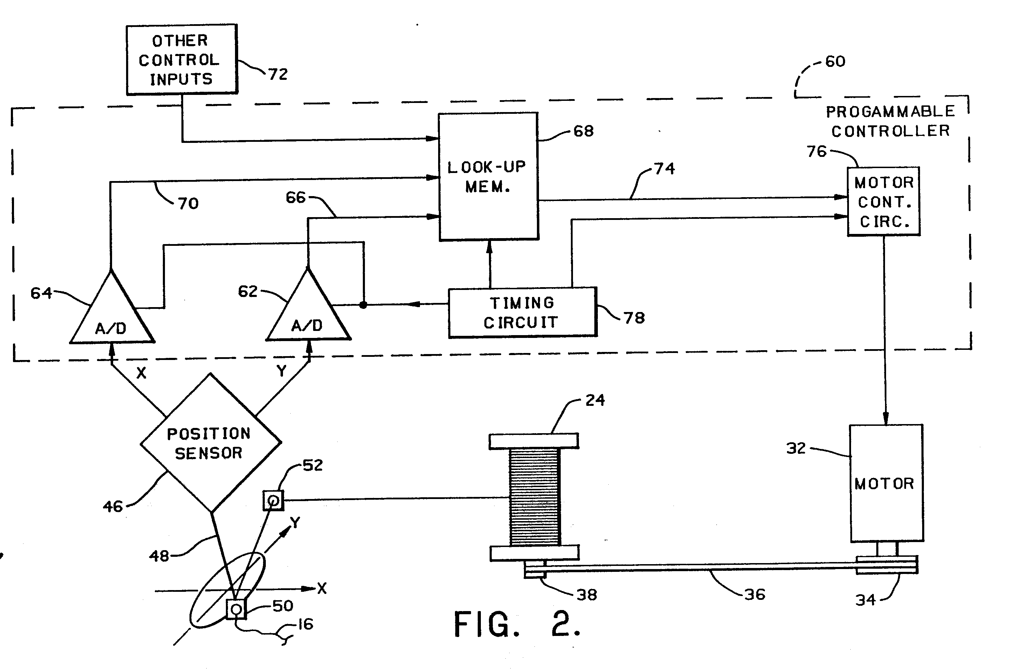

A reversible DC motor 32 is mounted on board 19, and a pulley 34 is mounted on the shaft of motor 32. A belt 36 connects pulley 34 to a pulley 38 (Fig. 2) for rotating reel 24. One end of a board 40 is affixed to a rod 42 which is journalled for rotation between arm members 20. Board 40 leans against fiber supply 26 to keep it from unravelling.

Each end of a rail 44 is affixed to a respective one of the arm members 20. An X-Y position sensor 46 is mounted at a central position on rail 44 and movably supports a wand 48 having an eye element 50 affixed to the end thereof. Fiber 16 is guided by eye element 50 and by an eye element 52 which is affixed to rail 44 adjacent sensor 46. Sensor 46 is of the joy-stick type, with a pair of linear potentiometers (not illustrated) which are coupled to wand 48 in such a manner that one potentiometer is responsive to movement of wand 48 in the X direction and the other potentiometer is responsive to movement in the Y direction (see Fig. 2). A device suitable for use as sensor 46 is available, for example, from the Radio Shack, a division of Tandy Corporation, 1400 One Tandy Center, Forth Worth, Texas 76102, under Model No. 26-3012.

As will be discussed, the X-Y position of wand 48 is sensed in order to determine whether cable 16 should be reeled out of taken up. Fiber 16 is too slack when wand 48 is vertically positioned, and motor 32 should be actuated to wind excess fiber onto reel 24. This may occur, for example, when vehicle 14 has stopped, or when it makes a U-turn. On the other hand, tension in fiber 16 causes wand 48 to be displaced from the vertical position, and when the tension reaches a suitable value, motor 32 is actuated to dispense additional fiber 16.

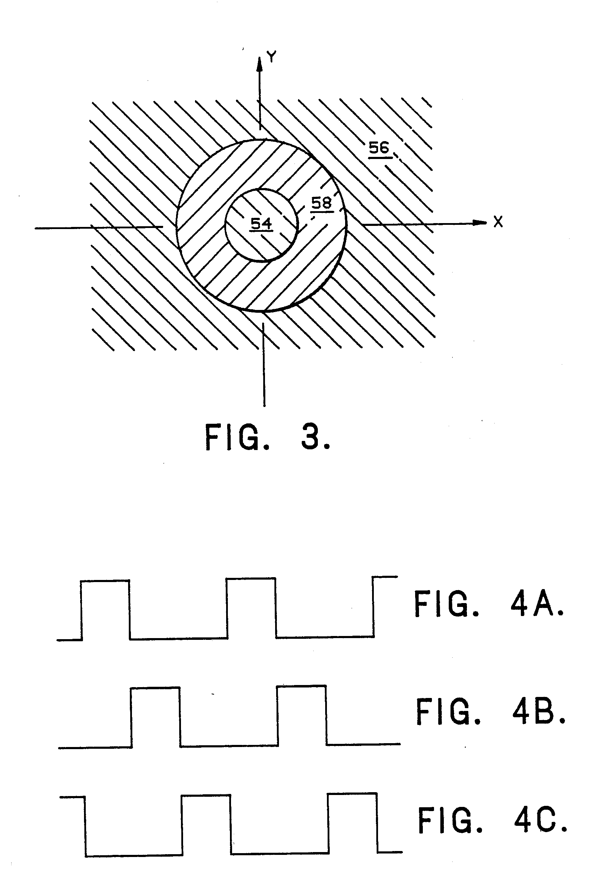

Figure 3 illustrates a "retract" region 54 corresponding to the vertical position of wand 48 and wand positions that are near the vertical. "Dispense" region 56 corresponds to relatively large deviations from the vertical, meaning that the fiber tension is too high and should be reduced. Between regions 54 and 567 is a "stop" region where the fiber is neither too slack nor too tense; it is desirable to maintain the fiber tension at such a level that wand 48 remains in stop region 58. Programmable controller 60 in Fig. 2 is responsible for doing this.

With reference to Fig. 2, controller 60 includes an analog-to-digital converter 62 which receives a Y signal from sensor 46 (that is, a signal whose magnitude is proportional to the deviation of wand 48 in the Y direction) and an analog-to-digital converter 64 which receives an X signal from sensor 46. Bus 66 conveys the digital output of converter 62 to corresponding address input pins (not illustrated) of look-up memory 68. Similarly, bus 70 conveys the digital output of converter 64 to corresponding address input pins. If further address input pins are available, other digital control inputs 72 can be accommodated. A short settling time after the address is applied to the address input pins, the content of the addressed memory location is available on output pins (not illustrated) of memory 68. This output is conveyed by bus 74 to motor control circuit 76, which drives motor 32 at a speed which depends upon the magnitude of the output word and in a direction which depends upon the sign of the output word. A device suitable for use as motor control circuit 76 is commercially available from Vantek Inc., 15445 Ventura Boulevard, Sherman Oaks, California 91413, under Model No. CDFR-2. Although not illustrated, this device includes a latch to receive a sign bit and a plurality of magnitude bits, an A/D converter to produce an analog signal corresponding to the magnitude bits, and a drive circuit which powers a motor in accordance with the sign bit and analog signal.

Timing circuit 78 includes a clock (not illustrated) and means such as a counter (not illustrated) for generating three phase-displaced pulse trains as illustrated in Figures 4A-4C. The pulse train of Fig. 4A is applied to an enable input of converters 62 and 64; the pulse train of Fig. 4B is applied to an enable input of memory 68; and the pulse train of Fig. 4C is applied to an enable input of motor control circuit 76. As a result, timing circuit 78 first signals converters 62 and 64 to provide conversion bits, then signals memory 68 to receive the conversion bits in an address register (not illustrated), and after the output word has had time to appear signals circuit 76 to receive the output word. This sequence is then repeated. It will be apparent that symmetrical pulse trains as illustrated in Figs. 4A-4C are not required and that, in particular, memory 68 may be enabled very rapidly after converters 62 and 64 have been enabled and that circuit 76 may be enabled very rapidly after memory 68 has been enabled. Moreover, circuit 78 may be dispensed with altogether in situations where sequencing is not critical. In apparatus 10, for example, the output bits of converters 62 and 64 normally remain constant for relatively long periods of time. Since it is unlikely that an output bit from converters 62 or 64 is changing at any particular moment, memory 68 could be permanently enabled to generate output bits corresponding to the then-present address. An exclusive OR gate (not illustrated) having inputs to receive the output of memory 68 could be used to detect changes and to enable circuit 76 after a brief delay following a change. Omission of timing circuit 78 would cause motor 32 to have motor surges as bit changes ripple through programmer 60, but such improper operation would be extremely brief and would not cause excessive fiber tension or excessive slack.

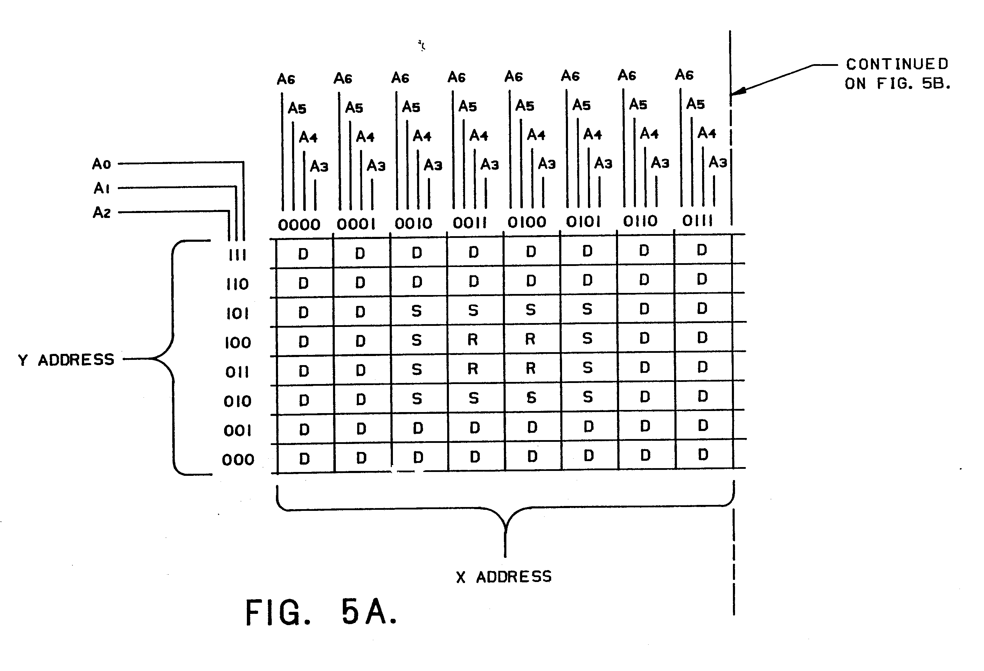

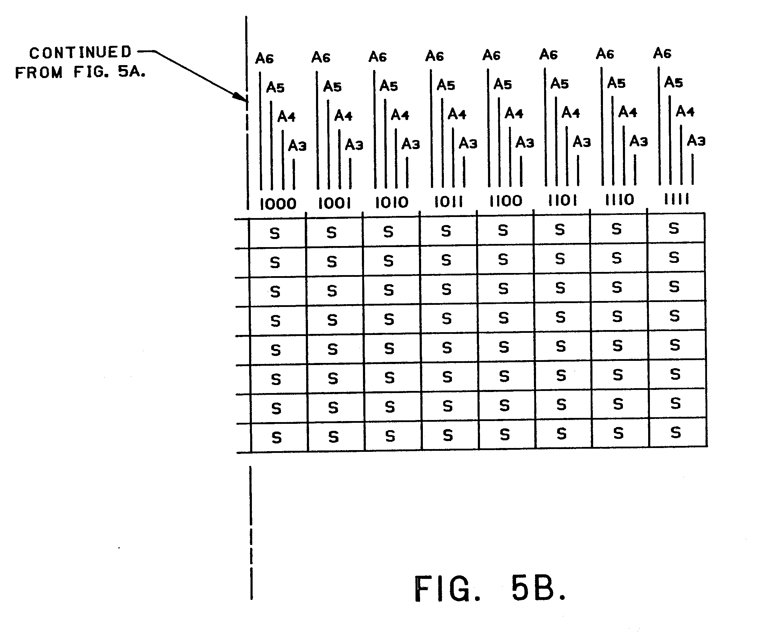

Memory 68 may be a ROM, a PROM, or a writable memory, in which case circuitry (not illustrated) would be needed to ensure that memory 68 is loaded before motor 32 is initially actuated. In general, the contents of the look-up memory means in the motor controller of the present invention can be determined analytically or graphically. Figures 5A and 5B (hereafter referred to, collectively, as Fig. 5) illustrate an example of the graphic technique, using programmable controller 60 as an example.

Referring to Figs. 2, 3 and 5, for purposes of illustration it is assumed that memory 68 is a 128 word × 8 bit ROM, having seven address input pints (not illustrated) $A_0$, $A_1$, $A_2$, $A_3$, $A_4$, $A_5$ and $A_6$, and storing a one-byte word at each of the 128 memory locations. A/D converter 62 is assumed to have a three-bit output which is applied to the three low order address input terminals $A_0$ ... $A_2$. A/D converter 64 is also assumed to have a three-bit output, which is applied to address input pins $A_3$, $A_4$ and $A_5$. Other control inputs 72 is assumed to be a switch which provides an "0" output to address input pin $A_6$ when vehicle 14 (Fig. 1) is dispensing or taking up fiber 16, and a "1" output when motor 32 is to be stopped regardless of signals from position sensor 46 (as when a new reel of fiber is being installed).

In Fig. 5, the rectangles in the grid designate memory locations corresponding to the various addresses. The four rectangles marked "R" represent retracted region 54 in Fig. 3. At these locations, a signal such as minus one is stored to cause motor 32 to retract excess fiber 16. The memory locations marked "S" correspond generally to "stop" region 58 in Fig. 3, and store zero. The storage positions marked "D" correspond to "dispense" region 56 in Fig. 3, and store plus one to cause additional fiber 16 to be dispensed. It should be noted that all memory locations where $A_6 = 1$ store the stop signal, zero. The limited capacity that has been assumed for memory 68 results in approximately square concentric regions in the left-hand side of Fig. 5 (that is, Fig. 5A), but it will be apparent that a larger capacity memory would permit the concentric regions to be rounded in simulation of the regions in Fig. 3. Nevertheless, the approximately square arrangement illustrated in Fig. 5 is entirely satisfactory for controlling apparatus 10.

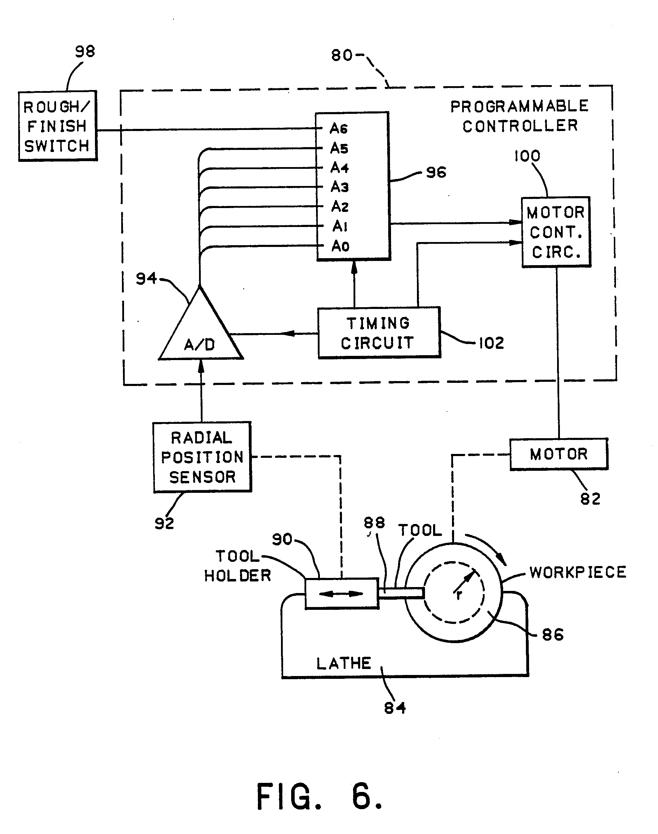

An alternative embodiment of the invention will be discussed with reference to Fig. 6. This figure illustrates a programmable controller 80 which is employed to control the spindled motor 82 of a lathe 84. Motor 82 spins a workpiece 86 which is machined by a cutting tool 88 secured to a radially movable tool holder 90. A radial position sensor 92 is mechanically coupled to holder 90 and provides an analog signal indicative of the radial position of the cutting surface of tool 88 with respect to the center of workpiece 86. Controller 80 is programmed to keep the cutting velocity (that is, the tangential velocity of workpiece 86 with respect to the cutting surface of tool 88) relatively constant, except at large and small values of the radius r.

Controller 80 includes an analog-to-digital converter 94 which receives the radial position signal from sensor 92 and provides a corresponding six-bit digital output. These six bits are supplied to address input terminals $A_0$ - $A_5$ of a 128 × 8 bit look-up memory 96. Address input terminal $A_6$ is connected to rough/finish switch 98. The eight memory output bits of memory 96 are supplied as a digital input signal to motor control circuit 100, which controls the speed of motor 92. Timing circuit 102 is connected to enable terminals of converter 94, memory 96, and circuit 100, and generates three phase-shifted pulse trains to sequentially enable these elements as previously discussed.

For purposes of illustrating how the cutting program stored in memory 96 may be determined, assume that workpiece 86 has an eight centimeter diameter and that the cutting surface of tool 88 is radially movable from $r = 0$ mm to $r = 64$ mm. Assume also that, for rough cutting, workpiece 86 should spin at a 2,000 rpm rate from $r = 0$ mm to $r = 5$ mm and thereafter a constant tangential cutting velocity is to be maintained until $r = 40$ mm (that is, the periphery of workpiece 86). Finally, for finish cutting assume that the cutting speed is to be 25 percent higher.

On the basis of the above assumptions, the tangential cutting velocity (in mm/sec) which is to be maintained outward of $r = 5$ mm is:

$$2 \pi r \omega = 2 \pi (5) (2000) \ 20,000 \ \pi$$

where r is the distance between the center of workpiece 86 and the cutting surface of tool 88, and where $\omega$ is the workpiece RPM. Accordingly, from $r = 5$ mm to $r = 40$ mm, the RPM which is to be maintained is:

$$\omega = \frac{10000}{r}$$

Outside of $r = 40$ mm (that is, past the periphery of workpiece 86) the RPM is of no particular concern but it is convenient to maintain the RPM that existed at $r = 40$ mm.

When one divides the range of radial displacement of the cutting surface of tool 88 into one millimeter segments, the following table for the content of memory 96 is obtained. In the table it is assumed that the bit on address input pin $A_6$ is "zero" for rough machining. For finish machining, when the bit on address input pin $A_6$ is "1," the RPM values at each radial position would be 25 percent higher.

## TABLE I

| Radius (in mm) | Address $A_5 \ldots A_0$ | Store (RPM) | Radius (in mm) | Address $A_5 \ldots A_0$ | Store (RPM) |
|---|---|---|---|---|---|
| 0-1 | 000 000 | 2000 | 32-33 | 100 000 | 303 |
| 1-2 | 000 001 | 2000 | 33-34 | 100 001 | 294 |
| 2-3 | 000 010 | 2000 | 34-35 | 100 010 | 286 |
| 3-4 | 000 011 | 2000 | 35-36 | 100 011 | 278 |
| 4-5 | 000 100 | 2000 | 36-37 | 100 100 | 270 |
| 5-6 | 000 101 | 1667 | 37-38 | 100 101 | 263 |
| 6-7 | 000 110 | 1429 | 38-39 | 100 110 | 256 |
| 7-8 | 000 111 | 1250 | 39-40 | 100 111 | 250 |
| 8-9 | 001 000 | 1111 | 40-41 | 101 000 | 250 |
| 9-10 | 001 001 | 1000 | 41-42 | 101 001 | 250 |
| 10-11 | 001 010 | 909 | 42-43 | 101 010 | 250 |
| 11-12 | 001 011 | 833 | 43-44 | 101 011 | 250 |
| 12-13 | 001 100 | 769 | 44-45 | 101 100 | 250 |
| 13-14 | 001 101 | 714 | 45-46 | 101 101 | 250 |
| 14-15 | 001 110 | 667 | 46-47 | 101 110 | 250 |
| 15-16 | 001 111 | 625 | 47-48 | 101 111 | 250 |
| . | . | . | . | . | . |
| . | . | . | . | . | . |
| 31-32 | 011 111 | 313 | 63-64 | 111 111 | 250 |

It will be apparent that the use of controller 80 to maintain a constant tangential velocity is not limited to lathes. In particular, controller 80 could be used to maintain a substantially constant read velocity for an optical disk in order to permit an increase in the density of data stored on the disk. Instead of using a 128 word memory, it would be appropriate to employ a memory having greater capacity in order to achieve narrower bands of control. It will also be apparent that memory chips could be connected in "parallel" in order to increase the number of output bits, with one chip storing the low order 8 bits and another chip storing the high order 8 bits.

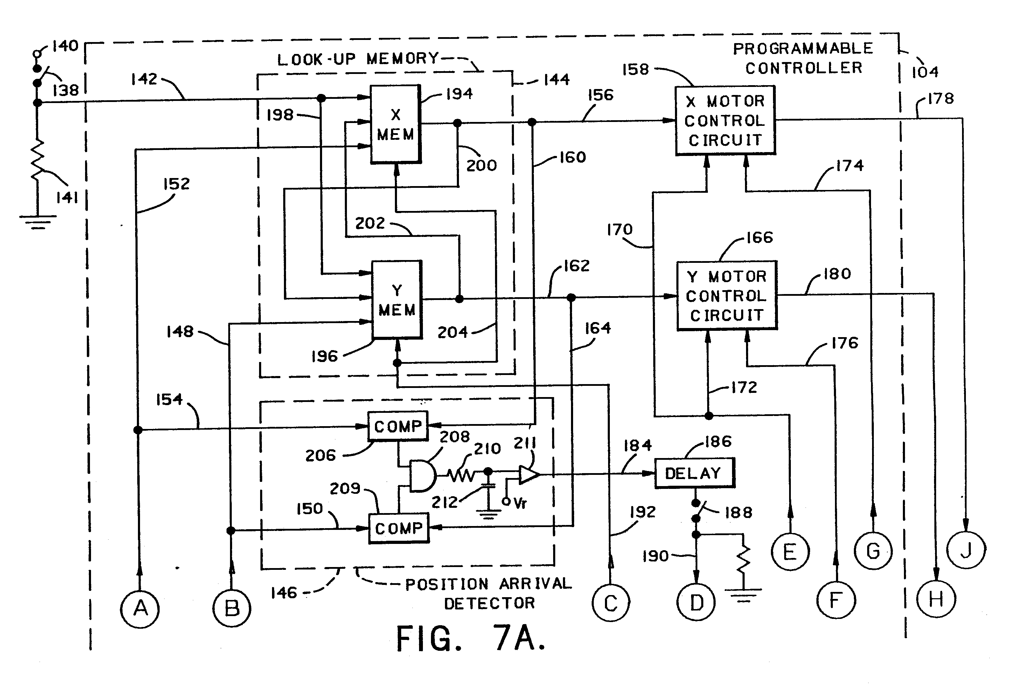

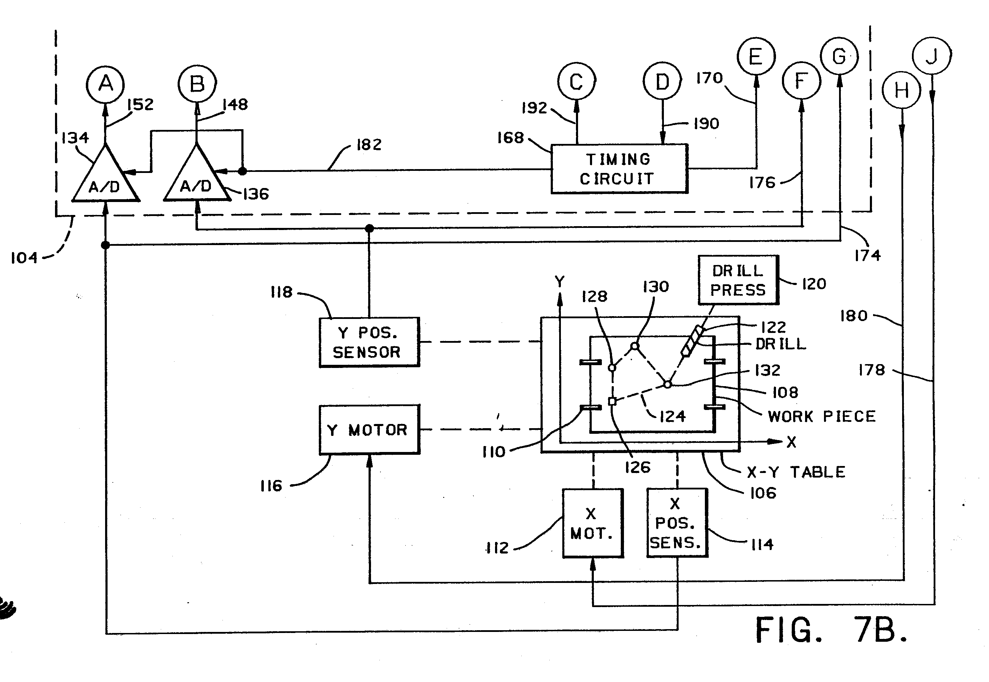

While the previous embodiments have illustrated the versatility of a programmable motor controller in accordance with the present invention, in these embodiments only one motor has been controlled. The invention is not restricted, however, to control of a single motor. Figures 7A and 7B (hereafter referred to, collectively, as Figure 7) illustrate a programmable controller 104 which is employed to control the position of an X-Y table 106 on which a workpiece 108 is mounted by clamps 110. A motor 112 is mechanically coupled to table 106 to move it in the X direction, and a position sensor 114 is provided to generate an analog X-position signal. Similarly, motor 116 moves table 106 in the Y direction, and a position sensor 118 generates a Y-position signal. A stationary drill press 120 rotates a drill bit 122 which can be forced against workpiece 108 to drill holes at positions along a path 124 that is determined by movement of table 106. For purposes of subsequent discussion, let it be supposed that a first or starting hole (illustrated in Figure 7 by a small square) 126 is to be drilled, followed by second, third, and fourth holes (illustrated by small circles) 128, 130, and 132. Figure 7 illustrates table 106 positioned so that drill bit 122 is poised to drill hole 132.

Programmable controller 104 includes analog-to-digital converters 134 and 136 which receive the signals from sensors 114 and 118, respectively. A switch 138 is connected between a positive power supply terminal 140 and a pull-down resistor 141 to provide a signal for moving table 106 so that drill bit 122 is positioned above starting hole 126 when switch 138 is closed. Conductor 142 conveys the signal from switch 138 to a look-up memory 144. Memory 144 may be provided by a single IC, a plurality of ICs whose address pins (not illustrated) receive the same address, or a plurality of ICs whose address pins receive different addresses.

The digital output of converter 136 is conveyed by buses 148 and 150 to address input pins (not illustrat-ed) of memory 144 and to an input port of position arrival detector 146. Buses 152 and 154 convey the digital output of converter 134 to address input pins (not illustrated) of memory 144 and to an input port of detector 146. Bus 156 delivers output bits from memory 144 to a motor position control circuit 158 for the X motor 112, and the same bits are conveyed via bus 160 to an input port of detector 146. Buses 162 and 164 carry output bits from memory 144 to motor position control circuit 166 for Y motor 116 and to an input port of detector 146. In addition to output bits from memory 144, circuits 158 and 166 receive enable signals from timing circuit 168 via conductors 170 and 172. Furthermore, circuit 158 is connected by conductor 174 to position sensor 114 for the X direction, and circuit 166 is connected by conductor 176 to position sensor 118 for the Y direction. Within motor control circuit 158, for example, a feedback signal received via conductor 174 is digitalized and compared to a position command received via bus 156, and an output signal is generated on conductors 178 to drive motor 112 until the sensed position is equal to the command position. Similarly, circuit 166 generates a signal on conductors 180 to drive motor 116 for the Y direction until the digital equivalent of a feedback signal received via conductor 176 is equal to a position command received form bus 162.

With continuing reference to Fig. 7, the general operation of programmable controller 104 sill now be discussed, followed by specific examples. First, the operator closes switch 138, whereupon the coordinates of starting hole 126 are read out of memory 144 and provided as position commands to control circuits 158 and 166. Motors 112 and 166 then position table 106 so that bit 122 is positioned above the point at which hole 126 is to be drilled. Timing circuit 168 emits a train of repeated pulses via conductor 182, so that converters 134 and 136 are repeatedly enabled. As a result, the digital signals on buses 148 and 152 represent the actual position of table 106 as it moves to the position at which starting hole 126 is to be drilled. When table 106 arrives, the digital signal on bus 154 (representing the actual position along the X axis) is the same as the digital signal on bus 160 (representing the command signal for movement along the X axis); and similarly, the digital signal on bus 150 (representing the actual position along the Y axis) is the same as the digital signal on bus 164 (representing the command Y position). Position arrival detector 146 detects that the command position has been achieved and emits an output signal on conductor 184 to delay circuit 186. Switch 188 is normally closed, so delay circuit 186 emits an input signal via conductor 190 to timing circuit 168 after a pause that is sufficient for an operator to actuate drill press 120 so as to drill hole 126 (the drilling step may, of course, be accomplished automatically rather than manually). After receiving the input signal from delay 186, timing circuit 168 emits an enable signal for memory 144 on conductor 192 and then emits an enable signal which is conveyed by conductors 170 and 172 to motor control circuits 158 and 166.

The storage location is memory 144 that is addressed by converters 134 and 136 when table 106 is positioned at starting hole 126 stores the coordinates of the next desired point on path 124; that is, the coordinates for hole 128. Accordingly, when memory 144 is enabled, the coordinates for hole 128 appear on buses 156 and 162; and when motor control circuits 158 and 166 are subsequently enabled, table 106 is moved to the desired location. This operation continues from one desired point along path 124 to another desired point until drill bit 122 is again positioned above starting hole 126, at which point the operator opens switch 188 to discontinue the input signals to timing circuit 168. This tops table 106 since, although converters 134 and 136 are repeatedly enabled by the pulse train on conductor 182, further enable signals are not provided by circuit 168 to memory 144 or motor control circuits 158 and 166.

As a first specific example of a controller 104, assume that memory 144 is a 128 word × 8 bit ROM having seven address input pins (not illustrated) $A_0$ ... $A_6$, and eight memory output pins (not illustrated) $Q_0$ ... $Q_7$. Also, assume that converter 136 emits a 3-bit Y address signal to pins $A_0$, $A_1$, and $A_2$; that converter 134 emits a 3-bit X address signal to input pins $A_3$, $A_4$, and $A_5$, and that conductor 142 is connected to pin $A_6$. Suppose also that bus 162 is connected to output pins $Q_0$, $Q_1$, and $Q_2$ to convey a 3-bit Y position command signal to circuit 166; that bus 156 is connected to output pins $Q_3$, $Q_4$, and $Q_5$ to convey a 3-bit X position command signal to circuit 158; and that output pins $Q_6$ and $Q_7$ are not used. Furthermore, let position arrival detector 146 be a six-bit comparator which compares the bits on pins $A_0$-$A_2$ to the bits on pins $Q_0$-$Q_2$ and which compares the bits on pins $A_3$-$A_5$ to the bits on pins $Q_3$-$Q_5$. To complete the assumptions for the first specific example, assume that table 106 is movable eight centimeters in the X direction and 8 centimeters in the Y direction; that the coordinates for hole 126 are (X = 3 cm, Y = 3 cm), that the coordinates for hole 128 are (X = 3 cm, y = 5 cm); that the coordinates for hole 130 are (X = 4 cm, Y = 6 cm); and that the coordinates for hole 132 are (X = 5 cm, Y = 4 cm).

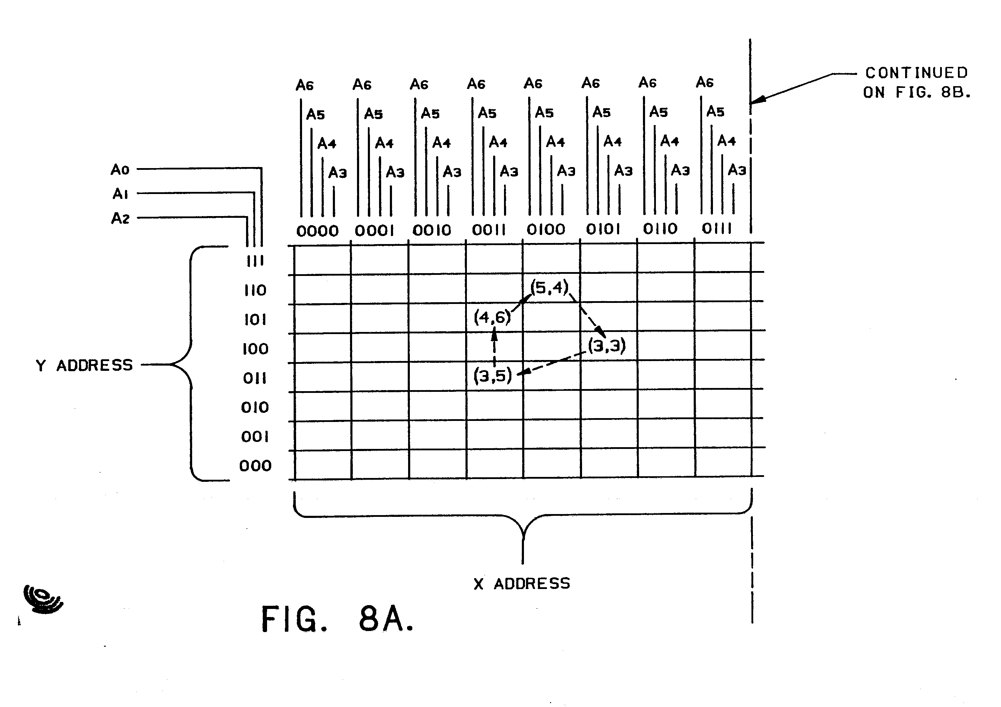

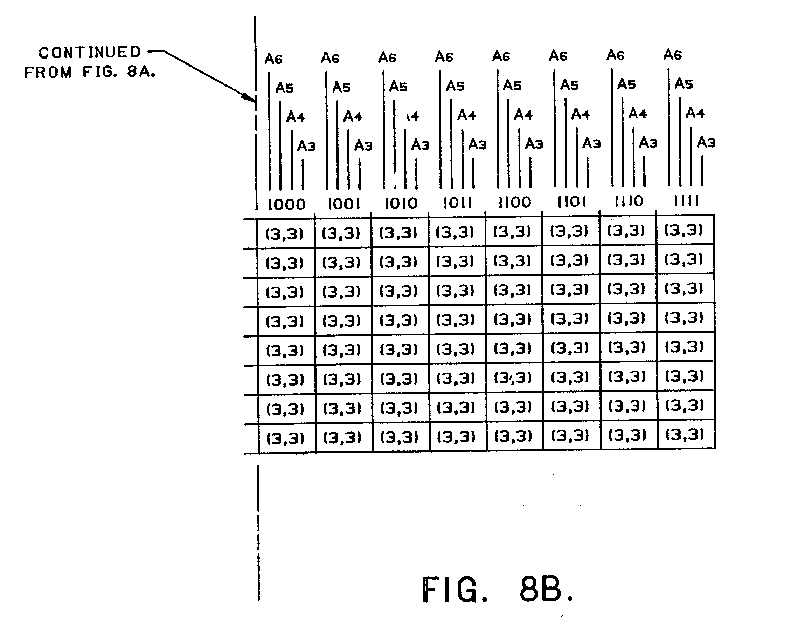

Figures 8A and 8B (hereafter referred to, collectively, as Fig. 8) schematically illustrate the content of a 128 × 8 ROM that has been programmed in accordance with the assumptions expressed above. All memory locations on the right-hand side (that is, Fig. 8B), corresponding to the right-hand side of Fig. 5 (that is, Fig. 5B), store the coordinates of the starting hole 126. Thus, whatever the position of table 106, when switch 138 is closed, table 106 moves to the starting position (3, 3). On the left-hand half of Fig. 8 (that is, Fig. 8A), the storage locations that are illustrated store the coordinates of the next desired position of table 106. For example, when table 106 arrives at the start position (3, 3), the position (3, 5) of hole 128 is read out; when table 106 arrives at position (3, 5), the position (4, 6) of hole 130 is read out, etc. The storage positions that are blank on the left-hand side of Fig. 8 are "don't care" positions, although as a practical matter it is useful to store the coordinates of starting hole 126 (or one of the other holes 128-132, depending on the progress along path 124) in order to return table 106 to path 124 in the event that it is jarred during operation.

The above example, while useful for explaining the principle of operation of controller 104, is of limited utility because there is only a 3-bit resolution in the X direction and a 3-bit resolution in the Y direction. Larger ROMs are, of course, available. For example, 512 K ROMs could be used instead of a single 128-word IC. This would provide 9-bit resolution in both directions (that is, 1/512 resolution rather than the 1/8 resolution when 3 bits are used). It will be apparent that the 18 output bits that are needed could be achieved by connecting the address input pins of three 512 K × 8 ROMs in parallel, with each ROM providing some of the output bits.

In the specific example discussed above, each of one or more memory ICs receives the same address, and corresponding to that address is a unique memory location which stores the address of the next desired position along path 124. However, the resolution of programmable controller 104 can be increased if the X

6

addresses are supplied to one memory and the Y addresses are supplied to another. This alternative, while an attractive one, introduces a complication. The problem is that there would no longer be a simple correspondence, as in Fig. 8, between the X and Y addresses and the memory locations. For example, if one were to attempt to use six of the seven address input pins of a 128 word ROM to receive an X address and six of the seven address input pins of a second 128 word ROM to receive Y address signals, with the seventh pin of the ROMs receiving the start signal from switch 138, $2^6 \times 2^6$ ($= 4096$) memory locations would be needed to construct a grid corresponding to the left-hand half of Fig. 8. Since this figure far exceeds the number of storage locations that are available in a pair of 128-word ROMs, and since every possible combination of an X address and a Y address could thus not be assigned a unique memory location, it will be apparent that memories which receive different X and Y addresses must be coordinated in some way in order to avoid ambiguity. Memory feedback bits can be employed, in accordance with a second example, to provide the necessary coordination. This will be explained in more detail with reference to the internal construction of memory 144 and detector 146 in Fig. 7.

Reference number 194 identifies an X memory and reference number 196 identifies a separate Y memory. Switch 138 is connected by conductor 142 to an address input pin (not illustrated) of memory 194 and by a conductor 198 to a corresponding address input pin (not illustrated) of memory 196. Converter 134 is connected by bus 152 to address input pins of memory 194, and converter 136 is connected by bus 148 to address input pins of memory 196. The output bits of memory 194 are provided by bus 156 to X motor control circuit 158 and, furthermore, at least one output bit is coupled to an address input pin of memory 196 by conductor(s) 200. Similarly, the output bits of memory 196 are provided by bus 162 to Y motor control circuit 166, and at least one output bit is coupled to an address input pin of memory 194 by conductor(s) 202. Conductor 192 is connected to an enable input of memory 196, which is connected to an enable input of memory 194 by a conductor 204. In detector 146, digital comparator 206 compares the signals on buses 154 and 160, and emits a digital "1" to one input of AND gate 208 when the signals are equal. Digital comparator 209 compares the signals on buses 150 and 164, and emits a digital "1" to the other input of gate 208 when the signals are equal. Accordingly, gate 208 turns ON when the actual X and Y positions of table 106 corresponds to the desired positions read out of memories 194 and 196. The output of gate 208 can be provided directly to delay circuit 186 if table 106 is driven so that it does not overshoot the desired position, or if delay circuit 186 accommodates a settling period during which any table oscillation is reduced to zero. However, in practical situations, it may be desirable to provide means for avoiding spurious signals from gate 208 to circuit 186 due to overshoot as table 106 settles at the desired position. To this end, a resistor 210 is connected between the output of gate 108 and a first input of comparator 211, the first input also being connected to ground by a capacitor 212. The second input of comparator 211 receives a reference voltage $V_r$, and the output of comparator 211 is connected by conductor 184 to the input of delay circuit 186. The result is that capacitor 212 is charged when gate 208 is ON and discharges through resistor 210 when gate 208 is OFF, and comparator 211 turns ON when the voltage across capacitor 212 exceeds $V_r$. It will be apparent that the "hit" periods at the desired table location and the "overshoot" periods are thereby integrated, and that comparator 211 turns ON when the ratio of these periods exceeds a threshold established by $V_r$.

Because of the feedback obits on conductors 200 and 202, memories 194 and 196 do not operate entirely independently. The feedback bits indicate to each of memories 194 and 196 what the other memory is doing. Although there are several ways in which memory feedback signals may be used for this purpose, the following example illustrates the technique.

Assume that X memory 194 is a $128 \times 8$ bit memory having seven address input pins (not illustrated) $XA_6$ ... $XA_0$ and eight output pins (not illustrated) $XQ_7$ ... $XQ_0$, and that Y memory 196 is a $128 \times 8$ bit memory having seven address input pins (not illustrated) $YA_6$ ... $YA_0$, and eight output pins (not illustrated) $YQ_7$ ... $YQ_0$. Also, assume that conductors 198 and 142 connect pins $XA_6$ and $YA_6$ to switch 138, that converter 134 provides a five-bit output which is applied to pins $XA_0$ ... $XA_4$; that converter 136 provides a five-bit output which is applied to pins $YA_0$ ... $YA_4$; that pins $XQ_0$ ... $XQ_4$ provide a five-bit signal to circuit 158 (the remaining three pins $XQ_5$ ... $XQ_7$ being unused); and that pins $YQ_0$ ... $YQ_4$ provide a five-bit output to circuit 166 (the remaining three pins $YQ_5$ ... $YQ_7$ being unused). Suppose also that conductor 200 is a single conductor which connects output pin $XQ_4$ of X memory 194 to address input pin $YA_5$ of Y memory 196, and that conductor 202 is a single conductor which connects output pin $YQ_4$ of memory 196 to address input pin $XA_5$ of memory 194. In summary, each of memories 194 and 196 receives five bits from its respective converter 134 or 136 and reads out five bits to its respective control circuit 158 or 166. The highest order bit read out of each each memory ($XQ_4$ for memory 194 and $YQ_4$ for memory 196) is applied to the other memory (pins $XA_5$ and $YA_5$) as an address input, along with the signals from converters 134 and 136. Finally, assume that table 106 is movable 32 millimeters ($2^5$) in the X and Y directions.

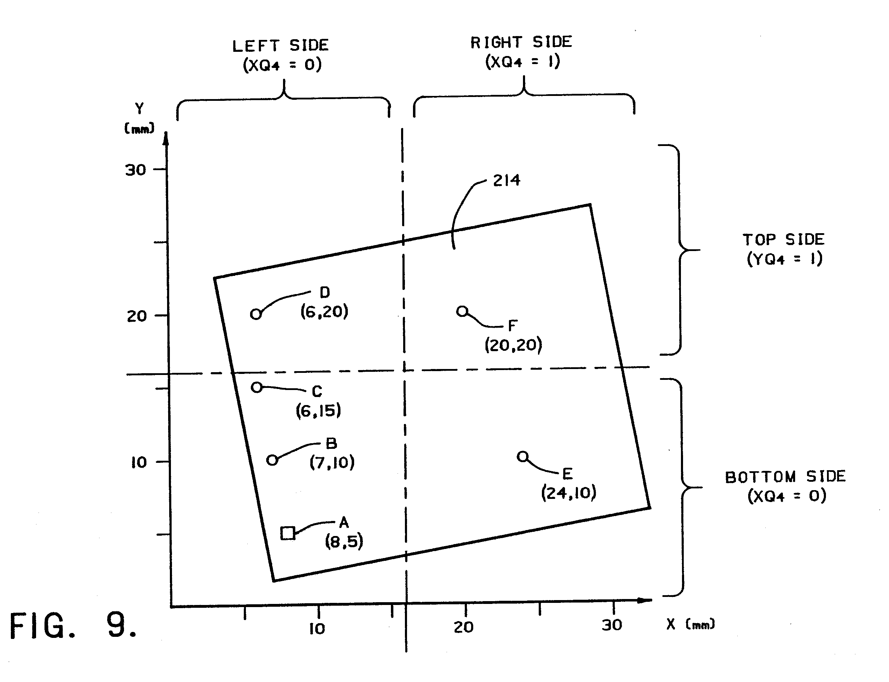

Figure 9 illustrates a workpiece 214 in which six holes A ... E are to be drilled, hole A being the starting hole and being illustrated as a small square. Workpiece 214 is secured to table 106 (Fig. 7) at a position such that hole A is to be drilled at the point (X = 8 mm, Y = 5 mm) with respect to the X-Y coordinate system. The coordinates of the remaining holes B ... E are also illustrated in Fig. 9. Since hole A is to be the starting hole, in X memory 194 the value 8 (binary 001000) is stored at every memory location where $XA_6 = 1$, and in Y memory 196 the value 5 (binary 000101) is stored at every memory location where $YA_6 = 1$.

In Fig. 9, the highest order bit to be read out of memory 194 is $XQ_4$; and, accordingly, the left half of the movement range of table 106 (Fig. 7) corresponds to $XQ_4 = 0$ and the right half corresponds to $XQ_4 = 1$.

Similarly, the bottom half of the movement range corresponds to $YQ_4 = 0$ and the top half corresponds to $YQ_4 = 1$. Since $XQ_4$ and $YQ_4$ are the feedback bits in this example, it will be apparent that the feedback bits effectively divide the range into regions, as illustrated. As will be seen, it is the use of feedback bits that permits holes in different regions to have the same X or Y coordinates. No two hole locations can have the same X or Y coordinates within a given region because of the addressing redundancy that would otherwise arise.

Table II illustrates how memories 194 and 196 may be programmed to drill holes B ... E after switch 138 has been closed to bring table 106 to the position of starting hole A. In Table II, the binary equivalents of the base 10 coordinates illustrated in Fig. 9 are presented in parenthesis below the coordinates, and the arrows indicate the output word which is to read out in response to the designated address signal.

### TABLE II

| HOLE | $XA_5$ | $XA_4$-$XA_0$ | | $XQ_4$-$XQ_0$ | $YA_5$ | $YA_4$-$YA_0$ | | $YQ_4$-$YQ_0$ |
|------|--------|---------------|---|---------------|--------|---------------|---|---------------|
| A | 0 | 8 (01000) | → → | 7 (00111) | 0 | 5 (00101) | → → | 10 (01010) |
| B | 0 | 7 (00111) | → → | 6 (00110) | 0 | 10 (01010) | → → | 15 (01111) |
| C | 0 | 6 (00110) | → → | 6 (00110) | 0 | 15 (01111) | → | 20 (10100) |
| D | 1 | 6 (00110) | → → | 24 (11000) | 0 | 20 (10100) | → → | 10 (01010) |
| E | 0 | 24 (11000) | → → | 20 (10100) | 1 | 10 (01010) | → → | 20 (10100) |
| F | 1 | 20 (10100) | → → | 8 (01000) | 1 | 20 (10100) | → → | 5 (00101) |

With reference to Table II and Figs. 7 and 9, table 106 moves toward position (8, 5) for hole A when switch 138 is closed. Upon arrival at this position, gate 208 turns ON, and after a delay for drilling the hole and after switch 138 is opened, memories 194 and 196 are enabled. At the moment of enablement, the value (01000) is supplied by converter 134 to address input pins $XA_4$-$XA_0$ and the value 0 is supplied by memory output pin $YA_4$ to address input pin $XA_5$. Similarly, the value (00101) is supplied by converter 136 to address input pins $YA_4$-$YA_0$, and the value 0 is supplied from output pin $XA_4$ to address input pin $YA_5$. In X memory 194, the value (00111) is stored at address (001000) and in Y memory 196 the value (01010) is stored at the address (000101). Accordingly, at hole A the value 7 is read out of X memory 194, and the value 10 is read out of Y memory 196. These values identify the position desired for hole B, and after circuits 158 and 166 are enabled, table 106 moves to the desired position. When the position for hole B is reached, the combination of the signals from converters 134 and 136 and the feedback bits provide addresses for storage locations at which the coordinates for hole C are stored. This process continues for holes D, E, and F.

It should be observed that holes C and D in this example have the same X coordinate (that is, 6), and that only one memory location would be available if the address supplied to X memory 194 depended entirely upon the output of converter 134. However, from Table II it will be seen that the transition from $YQ_4 = 0$ to $YQ_4 = 1$, as table 106 moves from position C to position D, effectively provides an additional storage location corresponding to the X = 6 position. The feedback bits also provide two storage locations where the Y coordinate is 20.

In practical situations it is frequently necessary to drill holes in one or more rows, as in a printed circuit board. To obtain further memory locations corresponding to a given X or Y position, more than one feedback bit from each memory can be employed. Furthermore, the coordinates can be displaced by rotating the workpiece with respect to the X-Y coordinate system. It should be noted that holes A, B, and C in Fig. 9 are in a row, and would have the same X coordinate within the same region if workpiece 112 were not mounted at a skewed position as illustrated.

The most general case is when enough feedback bits have to be used, in view of the particular positions desired, to divide either the X memory 194 or the Y memory 196 into a number of regions equal to the number of memory locations in the other memory. In this case, however, the number of feedback bits required would mean that one of the memories would need enough address input pins to handle both of A/D converters 134 and 136.

Before leaving the Fig. 7 embodiment, another alternative, which does not employ the position of table 106 to provide addresses, should be noted. If a series of positions is stored in memories 194 and 196 at sequential addresses, with the first position in the series being stored at address 000 ... 0, switch 134 could be used to clear a counter (not illustrated) that provides the same address to each of memories 194 and 196, the counter being incremented by the signal on conductor 190.

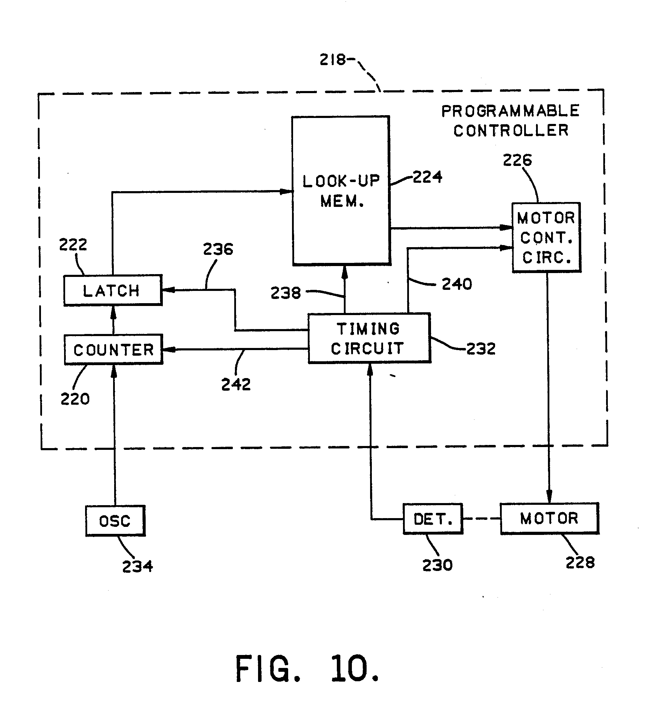

Although in the previously discussed embodiments motors have been controlled in response, inter alia, to signals from position sensors, other physical parameters can be sensed instead. For example, in Fig. 10 it is motor speed that is sensed, so that the revolutions per minute can be controlled.

In Fig. 10, programmable controller 218 includes a counter 220 which is connected via a latch 222 to address input pins (not illustrated) of look-up memory 224. The output of memory 224 is provided as an input to motor control circuit 226, which drives motor 228. A detector 230 is coupled to the shaft (not illustrated) of motor 228 and emits a single pulse to timing circuit 232 each rotation of motor 228. An oscillator 234 provides a pulse train which is counted by counter 220.

During operation, timing circuit 232 responds to a pulse from detector 230 by sequentially emitting pulses on conductors 236, 238, 240, and 242, and then remains quiescent until another pulse is generated by detector 230. In response to the pulse on conductor 236, latch 222 stores the present count of counter 220 and provides this as an address for memory 224. Memory 224 is enabled by the pulse on conductor 238 and circuit 226 is enabled by the pulse on conductor 240. The pulse on conductor 242 clears counter 220, which then begins counting pulses from oscillator 234 until detector 230 generates its next pulse. It will be apparent that the address provided to memory 224 corresponds to the time required for one revolution of motor 228, and thus to motor speed. Of course, an analog sensor for motor speed and a digital-to-analog converter could be employed in lieu of counter 220, latch 222, detector 230, and oscillator 234.

Memory 224 stores 00 ... 0 at the address corresponding to the desired motor speed. For slight deviations below the desired motor speed, a small positive value is stored, and for greater deviations, a greater positive value is stored. Increasingly negative values are stored at addresses above the desired motor speed. In this way, motor 228 is speeded up if it is rotating too slowly or slowed if it is rotating too rapidly, and it will be apparent that memory 224 permits control of the magnitude of the correction as a function of the deviation from the desired motor speed.

In some applications it may be desirable to limit the current through motor 228 after it has been actuated and is speeding up from zero RPM to the desired speed. This can be accomplished by storing a modest positive value at addresses corresponding to speeds substantially below the desired RPM. Furthermore, it may be desirable to limit the maximum speed of motor 228, which may be accomplished by storing zero at addresses substantially above the desired speed. In short, memory 224 not only permits one to tailor the response of motor 228 to anticipated deviations from the desired speed during normal operation, so that hunting can be avoided, it also permits control over motor current during start-up or heavy load conditions, or when the motor speed reaches an anomalously high level. Moreover, the frequency of oscillator 234 can be varied to permit the desired speed of motor 228 to be changed.

## Claims

1. An apparatus for programmably controlling at least one motor, characterized by:
   programmable look-up memory means (68; 96; 144; 224), having a plurality of storage locations each accessed by a respective address signal, for storing at said locations encoded control signals which correspond to predetermined motor responses;
   address generating means (46-50, 62, 64; 90-94; 114, 118, 134, 136; 220, 222, 230, 234) for selectively addressing said look-up memory means to read-out respective ones of said stored encoded control signals; and
   motor control means (76; 100; 158, 166; 226) for driving at least one motor in accordance with the read-out encoded control signals.

2. The apparatus of claim 1 characterized by said address generating means comprising sensor means for generating at least one sensor signal (46; 92; 114, 118; 230), and means (62, 64; 94; 134, 136; 220, 222, 234) responsive to said at least one sensor signal for generating a plurality of address bits.

3. The apparatus of claim 2 characterized by said look-up memory means, motor control means, and means for generating a plurality of address bits being responsive to enabling signals, and further comprising a timing circuit (78; 102; 168; 232) to cyclically emit enabling signals first to said means for generating a plurality of address bits, then to said look-up memory means, and then to said motor control means.

4. The apparatus of claim 3 characterized by said address generating means further comprising additional control means (72; 98; 138-142) for generating at least one additional address bit.

5. The apparatus of claim 4 characterized by said additional control means comprising a switch (98; 138).

6. The apparatus of claim 2 characterized by said at least one motor (32) being operatively connected to a reel (24) for dispensing and taking up a filament (16), and said sensor means comprising a movably mounted filament guide (50) and X-Y position sensor means (46), operatively connected to said filament guide, for generating an X-position signal corresponding to the position of said fiber guide along an X-axis and for generating a Y-position signal corresponding to the position of said fiber guide along a Y-axis.

7. The apparatus of claim 6 characterized by said X-position signal and said Y-position signal being analog signals and said means for generating a plurality of address bits comprising an A/D converter (64) which receives said X-position signal and another A/D converter (62) which receives said Y-position signal.

8. The apparatus of claim 6 characterized by said look-up memory means (68) storing a first value at storage locations having addresses which correspond to a central region (54) on an X-Y plane, a second value at storage locations having addresses which correspond to an annular region (58) around said central region, and a third value at storage locations having addresses which correspond to an outer region (56) disposed around said annular region, said first value causing said motor to take up filament, said second value causing said motor to stop, and said third value causing said motor to dispense fiber.

9. The apparatus of claim 2 characterized by said at least one motor (82) being operatively connected to a first member (86) which is mounted to be spun about an axis and which cooperates with a second member (88, 90), said second member being radially movable with respect to said axis, and wherein said sensor means comprises radial position sensor means (92) for generating a radial position signal corresponding to the distance between said axis and said second member.

10. The apparatus of claim 9 characterized by said radial position signal being an analog signal and said means for generating a plurality of address bits being an A/D converter (94) which receives the radial position signal.

11. The apparatus of claim 9 characterized by the storage locations of at least a portion of said look-up memory means (96) storing values whose magnitudes decrease as the addresses of the storage locations increase, so that said motor spins said first member at a substantially constant tangential velocity with respect to said second member despite radial movement of said second member.

12. The apparatus of claim 2 characterized by the apparatus programmably controlling a plurality of motors (112, 116) which operate in conjunction with one another; said look-up memory means (144) stores sets of encoded control signals which correspond to predetermined responses of respective motors; and said motor control means includes means (158, 166) for driving each motor independently.

13. The apparatus of claim 12 characterized by the apparatus controlling two motors which cooperate to move a member (106) in an X-Y plane; said look-up memory means storing values which correspond to points on a predetermined path of said member in the X-Y plane; and wherein said sensor means (114, 118) including means for generating an X-position signal corresponding to the position of said member along an X-axis and for generating a Y-position signal corresponding to the position of said member along a Y-axis.

14. The apparatus of claim 13 characterized by said X-position signal and said Y-position signal being analog signals and said means for generating a plurality of address bits including an A/D converter (134) which receives said X-position signal and another A/D converter (136) which receives said Y-position signal.

15. The apparatus of claim 13 characterized by said look-up memory means comprising an X look-up memory (194) and a Y look-up member IC (196).

16. The apparatus of claim 2 characterized by said apparatus controlling the angular velocity of a motor (228), and said sensor means comprising means (230) for generating a first pulse train having a frequency which corresponds to the actual angular velocity of said motor.

17. The apparatus of claim 16 characterized by said means for generating a plurality of address bits including means (234) for generating a second pulse train, and means for counting (220) pulses of said second pulse train between successive pulses of said first pulse train.

FIG. 1.

0282270

FIG. 2.

0282270

FIG. 3.

FIG. 4A.

FIG. 4B.

FIG. 4C.

CONTINUED ON FIG. 5B.

| | 0000 | 0001 | 0010 | 0011 | 0100 | 0101 | 0110 | 0111 |
|---|---|---|---|---|---|---|---|---|
| 111 | D | D | D | D | D | D | D | D |
| 110 | D | D | D | D | D | D | D | D |
| 101 | D | D | S | S | S | S | D | D |
| 100 | D | D | S | R | R | S | D | D |
| 011 | D | D | S | R | R | S | D | D |
| 010 | D | D | S | S | S | S | D | D |
| 001 | D | D | D | D | D | D | D | D |
| 000 | D | D | D | D | D | D | D | D |

A6 A5 A4 A3 (column address bits)

A0 A1 A2

Y ADDRESS

X ADDRESS

FIG. 5A.

| | A6 | A6 | A6 | A6 | A6 | A6 | A6 | A6 |
| | A5 | A5 | A5 | A5 | A5 | A5 | A5 | A5 |
| | A4 | A4 | A4 | A4 | A4 | A4 | A4 | A4 |
| | A3 | A3 | A3 | A3 | A3 | A3 | A3 | A3 |
| | 1000 | 1001 | 1010 | 1011 | 1100 | 1101 | 1110 | 1111 |
|---|---|---|---|---|---|---|---|---|
| | S | S | S | S | S | S | S | S |
| | S | S | S | S | S | S | S | S |
| | S | S | S | S | S | S | S | S |
| | S | S | S | S | S | S | S | S |
| | S | S | S | S | S | S | S | S |
| | S | S | S | S | S | S | S | S |
| | S | S | S | S | S | S | S | S |
| | S | S | S | S | S | S | S | S |

FIG. 5B.

0282270

0282270

FIG. 6.

FIG. 7A.

FIG. 7B.

FIG. 8A.

CONTINUED ON FIG. 8B.

Y ADDRESS

X ADDRESS

| A6 | A6 | A6 | A6 | A6 | A6 | A6 | A6 |
| A5 | A5 | A5 | A5 | A5 | A5 | A5 | A5 |
| A4 | A4 | \4 | A4 | A4 | A4 | A4 | A4 |
| A3 | A3 | A3 | A3 | A3 | A3 | A3 | A3 |
| 1000 | 1001 | 1010 | 1011 | 1100 | 1101 | 1110 | 1111 |
| (3,3) | (3,3) | (3,3) | (3,3) | (3,3) | (3,3) | (3,3) | (3,3) |
| (3,3) | (3,3) | (3,3) | (3,3) | (3,3) | (3,3) | (3,3) | (3,3) |
| (3,3) | (3,3) | (3,3) | (3,3) | (3,3) | (3,3) | (3,3) | (3,3) |
| (3,3) | (3,3) | (3,3) | (3,3) | (3,3) | (3,3) | (3,3) | (3,3) |
| (3,3) | (3,3) | (3,3) | (3,3) | (3,3) | (3,3) | (3,3) | (3,3) |
| (3,3) | (3,3) | (3,3) | (3,3) | (3,3) | (3,3) | (3,3) | (3,3) |
| (3,3) | (3,3) | (3,3) | (3,3) | (3,3) | (3,3) | (3,3) | (3,3) |
| (3,3) | (3,3) | (3,3) | (3,3) | (3,3) | (3,3) | (3,3) | (3,3) |

FIG. 8B.

TOP SIDE
(YQ4 = 1)

BOTTOM SIDE
(XQ4 = 0)

RIGHT SIDE
(XQ4 = 1)

LEFT SIDE
(XQ4 = 0)

214

F
(20,20)

E
(24,10)

D
(6,20)

C
(6,15)

B
(7,10)

A
(8,5)

X (mm)

Y (mm)

FIG. 9.

0282270

FIG. 10.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 748 995 (EBERHARD DIETER) * The whole document * --- | 1,2,4 | G 05 B 19/403 G 05 B 19/04 |
| X | SEMICONDUCTOR CIRCUIT DESIGN, B.Morris, vol. 4, 1975, pages 139-140, Texas Instruments, Bedford, GB; H.COOK: "X Use of programmable read only memories" * Pages 139-140 * | 3 | |
| A | IDEM. ----- | 16-17 | |

TECHNICAL FIELDS SEARCHED (Int. Cl.4)

G 05 B 19/00

The present search report has been drawn up for all claims

| Place of search | Date of completion of the search | Examiner |
|---|---|---|
| THE HAGUE | 04-05-1988 | HAUSER L.E.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................
& : member of the same patent family, corresponding document

EPO FORM 1503 03.82 (P0401)